# EUROPÄISCHE PATENTANMELDUNG

(11) **EP 2 110 735 A2**
(43) Veröffentlichungstag der Anmeldung: **21.10.2009**
(21) Anmeldenummer: 09004325.8
(22) Anmeldetag: 26.03.2009
(51) Int. Cl.: G06F 3/02

(54) **Tastatur mit Fortsatz**

(30) Priorität: 15.04.2008 DE 102008019014; 04.07.2008 DE 102008031687
(71) Anmelder: Preh KeyTec GmbH, 97638 Mellrichstadt (DE)
(72) Erfinder: Hochgesang, Gerhard, 97616 Bad Neustadt (DE); Schmöger, Klaus, 97616 Bad Neustadt (DE)
(74) Vertreter: Dietrich, Barbara

(57) **Zusammenfassung**

Die Erfindung betrifft eine Tastatur (1) als Peripheriegerät für eine Rechnereinheit mit einem Tastenfeld (3) und einem zugehörigen Gehäuse (2), wobei an dem Gehäuse (2) eine Verlängerung (6) befestigt ist. Die Tastatur zeichnet sich dadurch aus, dass in der Verlängerung (6) wenigstens ein Lesegerät für das berührungslose Auslesen von auf identifikationskarten oder Zugangskarten oder Dokumenten hinterlegten Daten aufgenommen ist.

## Beschreibung

Die Erfindung betrifft eine Tastatur als Peripheriegerät für eine Rechnereinheit, wie sie üblicherweise für die Dateneingabe an einer Rechnereinheit, wie einem PC, Verwendung findet. Es handelt sich daher um ein Bedienelement, das eine Anzahl von mit den Fingern zu drückender Tasten enthält, die in einem Tastenfeld angeordnet sind. Bei den Tasten handelt es sich im Allgemeinen um elektromechanisch arbeitende Tastkontaktschalter. Bei den bekannten PC-Tastaturen umfasst das Numerische- und oder das Alpha- und oder das Alphanumerische-Tastenfeld üblicherweise 14 bis 105 Tasten, je nach gewünschten Sonderfunktionen können auch mehr oder weniger Tasten vorgesehen sein. Die Zuordnung von Taste zu damit erzeugtem Zelchen ("Scancode") ergibt sich aus der sogenannten Tastaturbelegung. Diese Ist für eine deutsche Tastatur in der DIN-Norm 2137 spezifiziert.

Für eine schnelle und effiziente Dateneingabe wird allgemein eine Tastatur bevorzugt. Da neben der manuellen Dateneingabe, oft zusätzliche Eingaben erforderlich sind, sind meist weitere Peripheriegeräte mit der Rechnereinheit verbunden, beispielsweise optische Scanner, wie Barcode-Leser. Mit dem Ziel einer hohen Integrationsdichte Ist es allgemein erwünscht, diese Peripheriegeräte zusammenzuführen. Eine getrennte Anordnung hat einen enormen Platzbedarf, die Verkabelung ist sehr störend und störanfällig. Zudem hat sich gezeigt, dass gerade beim Auslesen von Identifikations- oder Zugangskarten Bedarf nach einer Lösung besteht, bei der die Anordnung der Karte in der Nähe der Tastatur möglich ist. Einerseits ist es bei diesen Karten regelmäßig erforderlich, dass neben dem automatischen, optischen oder funkgesteuerten Auslesen, der auf der Karte hinterlegten Daten, eine zusätzliche Übernahme von Daten erforderlich ist, die auf der Karte aufgedruckt sind und mittels Tastatur einzugeben sind. Daher ist eine tastatumahe Anordnung nicht nur erwünscht, um das Ablesen der Daten zu erleichtern sondern auch erforderlich, da eine mündliche Abfrage der Daten beim Karteninhaber sowie eine entferntes Ablegen der jeweiligen Karte aus datenschutzrechtlichen Überlegungen bedenklich ist.

Die Erfinder haben sich daher die Aufgabe gestellt, eine Tastatur so weiter zu entwickeln, dass neben der manuellen, das heißt tastaturgebundenen Eingabe auch eine Dateneingabe per Funk oder auf optischem Wege von auf Identifikations- oder Zugangskarten hinterlegten Daten ermöglicht wird, wobei die Eingabe schnell, zuverlässig und sicher erfolgt.

Diese Aufgabe wird erfindungsgemäß dadurch gelöst, dass an der Tastatur eine Verlängerung befestigt ist, wobei mittels der Verlängerung ein berührungsloses Auslesen von Kartendaten erfolgen kann, wie im Patentanspruch 1, beschrieben. Vorteilhafte Ausgestaltungen sind jewells Gegenstand der abhängigen Ansprüche.

Aus der EP 1 070 299 B1 (DE 699 08 339 T2) ist ein Endgerät für Bibliotheken und dergleichen bekannt. Das Selbstbedienungs- Bibliotheksterminal hat ein Gehäuse, das eine Auflage als ersten Leihgegenstand- Aufnahmebereich bildet. Die Auflage Ist so angeordnet, dass sie einen Leihgegenstand aufnimmt, beispielsweise ein Buch, eine Zeitschrift, eine CD oder dergleichen. Ein Kartenhalter dient dazu, die Bibliothekskarte des Benutzers zu halten. Am Gehäuse ist ein Leser abgestützt und so angeordnet, dass er beispielsweise Barcodes auf den Leihgegenständen und Bibliothekskarten lesen kann, die sich auf der Auflage befinden. Ein weiterer Leihgegenstand -Aufnahmebereich wird durch einen Videoschacht gebildet und dient zur Aufnahme von Videohüllen. Das Terminal umfasst zudem eine Tastatur, einen Magnetstreifenleser einen Drucker, einen Näherungssensor und einen Akustikwandler. Im Gehäuse kann des Weiteren ein Geldschacht eingebunden sein. Die Auflagefläche für den Gegenstand ist so groß, wie der größte zu überwachende Gegenstand ist.

Die EP 0 372 716 B1 (DE 689 22 192 T2) offenbart ein System zum Überwachen der Entfernung von speziell gekennzeichneten Gegenständen aus einer Einrichtung durch einen speziell autorisierten Benutzer. Ein Beispiel ist ein Umlaufüberwachungssystem für Bibliotheken. Ein Terminal der Einrichtung umfasst neben dem AIC- System (Article Inventory Control) ein elektronisches Gegenstandsüberwachungs- EAS- System (Electronic Article Surveillance). Eine am Gehäuse angebrachte Komponente dient zur Messung der Charakteristik des Gegenstandes, wie beispielsweise die Dicke eines Buches.

Die US 2001/0038037 A1 beschreibt ein Kassensystem mit einem tragbaren, handhaltbaren optischen Leser in einem Gehäuse zum Auslesen von codierten Informatlonen auf Artikeln, der sich jedoch separat vom Tastaturgehäuse befindet.

Die DE 91 15 209 U1 betrifft eine Tastatur zum Anschluss an einen Computer mit lösbaren Tastaturblöcken bzw. Modulen, die miteinander verbindbar und wahlweise kombinierbar sind. Das lösbare Verbinden wird durch Steckverbindungen oder lösbare Kabelverbindungen ermöglicht.

Die eigene Erfindung betrifft eine Tastatur als Peripheriegerät für eine Rechnereinheit mit einem Tastenfeld und einem zugehörigen Gehäuse, wobei an dem Gehäuse eine Verlängerung befestigt ist. Beim dem Tastenfeld handelt es sich beispielsweise um ein numerisches und/oder ein alpha- und/oder alphanumerisches Tastenfeld, das 14 bis 105 Tasten beinhaltet, wobei die Tastenbelegung, sofern eine für deutschsprachige Verwender bestimmte Tastatur betroffen ist, in DIN 2137 spezifiziert ist. Die Erfindung ist hinsichtlich des Gehäuses nicht eingeschränkt: Es handelt sich beispielsweise um ein im Wesentlichen quaderförmiges, flaches Gebilde mit einer nach hinten, das heißt weg vom Bediener, leicht ansteigenden Oberseite, in der das Tastenfeld angeordnet Ist. Aus ergonomischen Überiegungen kann eine davon leicht abgewandelte Ausgestaltung gewählt sein: Beispielsweise weist das Gehäuse zwei zueinander gewinkelt angeordnete und gegebenenfalls gekrümmte Gehäuseabschnitte mit jeweils zugehörigem, für die linke beziehungsweise rechte Hand vorgesehenem Tastenfeld auf. Das Gehäuse besteht beispielsweise aus Kunststoff. Die Verlängerung weist beispielsweise ebenfalls ein Gehäuse aus Kunststoff aus. Tastaturgehäuse und Verlängerung können einteilig oder mehrteilig ausgestaltet sein. In der Verlängerung ist erfindungsgemäß wenigstens ein Lesegerät angeordnet, das sich für das berührungslose Auslesen (also für das berührungslose maschinelle Auslesen im Gegensatz zum Ablesen) von auf Identifikationskarten oder Zugangskarten hinterlegten Daten eignet. Die Begriffe Lesegerät sowie Identifikations- beziehungsweise Zugangskarte sind weit auszulegen. Es kommt bei dem Lesegerät lediglich darauf an, dass das Auslesen berührungslos erfolgt, das heißt eine verlängerungsnahe und damit tastaturnahe Anordnung gegebenenfalls in Kombination mit einer entsprechenden Ausrichtung der Karte reicht aus, um die darauf befindlichen Daten auszulesen.

Bei der Identifikationakarte kann es sich beispielsweise um einen Ausweis, insbesondere Reisepass, einen Führerschein, ein Flugticket, eine Kreditkarte oder einen sonstigen kartenförmigen, personenbezogenen Träger von berührungslos auslesbaren Daten handeln. Durch das berührungslose Auslesen kann die Karte weiter betrachtet werden und die darauf aufgedruckten zusätzlichen Daten, wie Name und ID-Nummer, Geburtstag, Adresse usw. können leicht abgelesen und einfach gegebenenfalls zeitgleich mit dem Auslesevorgang durch das Lesegerät zur Verfügung gestellt und mit der Tastatur eingegeben werden. Durch die tastaturnahe Anordnung des Lesegeräts befindet sich die Karte somit ebenfalls nahe an der Tastatur und dem zugehörigen Bediener, was aus datenschutzrechtlichen Überiegungen von Vorteil Ist. Durch die Anordnung des Lesegeräts in einer an der Tastatur angebrachten Verlängerung, ist eine für die Anordnung der beiden platzsparende und vergleichsweise störungsfreie Lösung geschaffen.

Bei dem berührungslos arbeitenden Lesegerät handelt es sich bevorzugt um ein optisches Lesegerät, bevorzugt einen 2D-Scanner (je nach verwendeter optischer Codierung der Daten mit CCD- oder Fotodiodenzeile) für auf der Identifikationskarte oder Zugangskarte optisch codierte Daten und/oder ein Funklesegerät für das Auslesen in einem Funktransponder der Identifikationskarte oder Zugangskarte hinterlegte Daten. Beispielsweise Ist das Funklesegerät für das Auslesen von RFID-Transpondem ausgelegt. In einer besonderen Ausgestaltung sind beide, zuvor erwähnte, berührungslosen Lesegeräte in die Verlängerung, die auch als Pultdach beschrieben Ist, aufgenommen. Neben diesen berührungslosen Lesegeräten können weitere Kartenlesegeräte In der Tastatur oder am Fortsatz vorgesehen sein: Beispielsweise ist ein Magnetetrelfenleser in die Tastatur integriert. Der 2D-Scanner und das Funklesegerät werden bevorzugt verwendet, weil bei der dabei verwendeten Technologie keine Relativbewegung zwischen Lesegerät und Karte erforderlich ist, was das Auslesen der Daten störunanfällig macht.

In einer vorteilhaften Ausgestaltung sind das Lesegerät und die Tastatur über eine gemeinsame Kommunikationsverbindung mit einer Rechnereinheit verbunden. Die Kommunikationsverbindung kann über ein gemeinsames Kabel, beispielsweise mit USB-Anschluss, oder Ober eine Funkverbindung, beispielsweise mittels Bluetooth^{®}, erfolgen. Dadurch wird der für die Kommunikation mit beiden Geräten und einer Rechnerelnheit erforderliche konstruktive Aufwand verringert.

Um das Ablesen der auf die Karte aufgedruckten Daten zu erleichtern, ist das Pultdach auf der einem Bediener der Tastatur abgewandten Seite des Gehäuses der Tastatur angeordnet. Anders ausgedrückt das Pultdach befindet sich vom Bediener aus gesehen hinter dem Tastenfeld, an der hinteren Schmalseite des Tastaturgehäuse. Bevorzugt ist das Pultdach in der Mitte dieser Seite angeordnet.

Das Pultdach erhebt sich im Wesentlichen über die durch das Tastenfeld definierte Ebene. So kann mit Hilfe des Daches die Ausrichtung der Karte durch den Bediener und damit deren Ablesen erleichtert werden bevor die Karte, bzw. das Dokument in die Ausformung zwischen dem Tastatur Gehäuse und an dem Pultdach nahezu hochkant aufgestellte und angelehnt werden kann.

Bevorzugt ist das Pultdach so ausgestaltet und das darin aufgenommene Lesegerät so angeordnet, dass eine auf oder über dem Gehäuse der Tatstatur und zwischen Pultdach und Tastenfeld angeordnete optische Codierung der Karte oder Dokument und oder ein dort angeordneter Funktransponder der Karte ausgelesen werden kann. Das automatische Auslesen der Daten erfolgt in einer Ausgestaltung nacheinander folgen, da für den Zugriff des RFID-Systems auf die im Prozessor integrierte Daten die vorherige Erkennung der Daten durch den Leser erforderlich ist und dies erfolgt während die Karten bzw. das Dokument (Personalausweis, Reisepass ua.) vom Benutzer zur Anlage gebracht wird.

Bevorzugt ist die Verlängerung pultförmig ausgestaltet, wobei beispielsweise in dem obersten, pultdachförmigen Teil des Fortsatzes ein optischer 2D-Scanner angeordnet ist, dessen Sichtfeld nach unten in Richtung Tastatur gerichtet ist.

Bevorzugt ist die Verlängerung verschwenkbar und/oder verschiebbar gegenüber dem Gehäuse der Tastatur gelagert. Dadurch kann die Ausrichtung der Verlängerung beziehungsweise dessen Lage entsprechend der gewünschten Ausrichtung der auszulesenden Karte und oder Dokument angepasst werden. In einer Ausgestaltung ist die Ver-längerung an das Gehäuse so verschwenkbar, dass dadurch die Bauhöhe der erfindungsgemäßen Tastatur senkrecht zur Tastenfeldebene minimiert wird, was die Lagerung und den Transport der Tastatur vereinfacht.

In einer anderen Ausgestaltung ist die Verlängerung trennbar und wieder befestigbar an dem Gehäuse der Tastatur befestigt, was ebenfalls die Lagerung und den Transport erleichtert.

Die Erfindung betrifft ferner eine Recheneinheit mit einer erfindungsgemäßen Tastatur in einer der zuvor beschriebenen Ausführungsformen. Die Recheneinheit dient zusammen mit einem darauf ausgeführten Computerprogremmprodukt der Decodierung und Auswertung der mittels des Lesegeräts gewonnenen Daten.

Die erfindungsgemäße Tastatur findet beispielsweise bei der Dateneingabe einem Verleih, bei der Vermietung, bei Versicherungen, im Hotel- und Gaststättengewerbe, bei der Zahlung-, der An- und Abmeldung auf Behörden, bei der Ausweiskontrolle an Grenzübergängen sowie beim Check-In auf Flughäfen seine Anwendung.

Die Erfindung betrifft ferner eine Verwendung der zuvor beschriebenen Tastatur zum berührungslosen Auslesen, bevorzugt optischen Auslesen und/oder Funkauslesen, von auf Zugangs- oder Identiflkationskarten hinterlegten Daten. Bevorzugt ist die optische Codierung gemäß einem der folgenden Standards bzw. Verfahren durchgeführt: 1 D-Code, wie EAN, UPC, IAN, JAN, 2/5-Interleaved, Code 39, Code 93, Code 128, 2D-Stapel-Code, wie Codablock, PDF 417, 2D-Matrix Code, wie QR-Code DetaMatrix, MaxiCode AztecCode und Dotcode.

In den beigefügten Figuren ist eine Ausführungsform der erfindungsgemäßen Tastatur gezeigt, ohne die Erfindung darauf zu beschränken, wobei
- Figur 1: eine schematische, perspektivische Ansicht der erfindungsgemäßen Tastatur 1 mit darauf angeordneter Identifikationskarte 6 ist;
- Figur 2: einige optische Datencodierung beispielhaft darstellt, die unter anderem auf der Identifikationskarte 6 zur Anwendung kommen können.

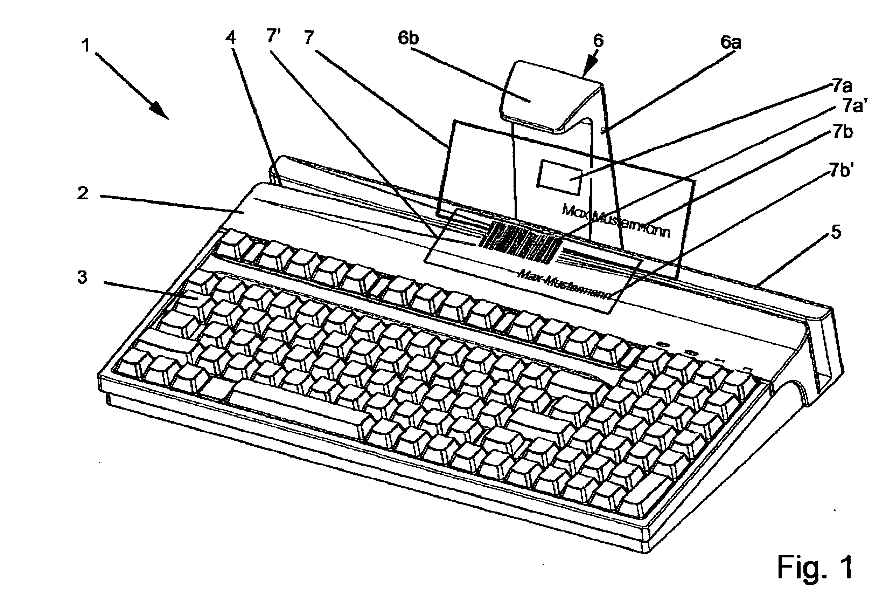

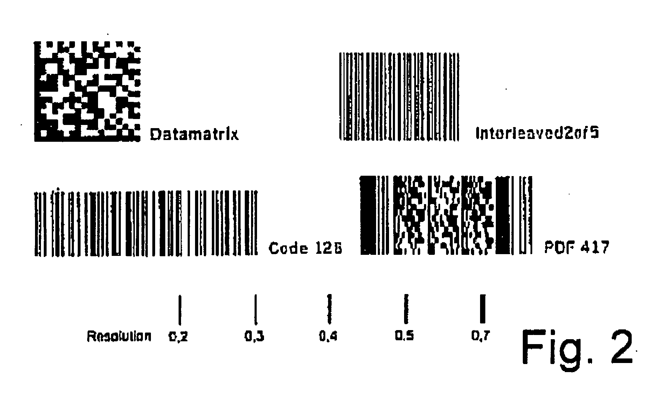

Figur 1 zeigt eine Ausführungsform der erfindungsgemäßen Tastatur 1. Die Tastatur 1 weist ein flaches, quaderförmiges Gehäuse 2 mit schräg stehender Oberseite auf, in die ein Tastenfeld 3 eingebettet ist. Vom Bediener der Tastatur 1 aus gesehen, befindet sich hinter dem Tastenfeld 3 ein Schlitz 4 eines Magnetstreifenlesers (nicht näher dargestellt), der dem Einlesen auf einem Magnetstreifen einer Identifikationskarte gespeicherten Daten dient, indem die Karte In entsprechender Ausrichtung durch für dem Magnetstrolfenleser vorgesehenen Schlitz 4 gezogen wird. Auf der dem Bediener abgewandten Schmalseite 5 ist an der Tastatur 1 eine sich pultförmig erhebende Verlängerung 6 befestigt, die wenigstens abschnittsweise entlang der zuvor genannten Schmalseite 5 verschiebbar ist. Die Verlängerung 6 weist ein vertikalen Säulenabschnitt 6a und eine pultdachförmige Haube 6b auf. Der vertikale Säulenabschnitt 6a kann der Aufnahme eines Funklesegeräts für das Auslesen auf einem Funktransponder, beispielsweise in RFIO-Technologie, hinterlegten Daten dienen (nicht dargestellt). In der Haube 6b ist ein 2D-Scanner aufgenommen, dessen Erfassungs- oder Sehfeld nach unten auf den Bereich zwischen der Schmalseite 5 und dem Tastenfeld 3 gerichtet ist. In dem Bereich kann eine Identifikationskarte 6 so angeordnet werden, dass sie sich einerseits im Boden der Flächenverlängerung 6a und In der Fortführung des Gehäuse 5 nach unten abstützt und andererseits an den Säulenabschnitt 6a des Fortsatzes 6 anlehnt. Die Daten 7a' und 7b' der Identiflkationskarte 7' werden durch den 2D-Scanners, der im 6b Bereich angeordnet ist ausgelesen, wobei sich die Karte 7' bzw. das Dokument parallel über dem Bereich 2 befindet. Die Positionlerung der Karte 7' kann anhand des mit dem Auge erkennbaren Laserstrahis des 2D-Scanners erfolgen. Die ausgelesenen Daten werden gegebenenfalls mit Hilfe einer an den Scanner angeschlossenen Rechnerelnheit und einem Computerprogrammprodukt ausgelesen und ausgewertet. Bei der gezeigten Anordnung der Karte 7 werden auf einem RFID- Chip 7a hinterlegte Daten erfasst. Figur 2 stellt einige optische Datencodierung beispielhaft dar, die unter anderem auf der Identifikationskarte 7 bzw. Dokument zur Anwendung kommen können.

## Patentansprüche

1. Tastatur (1) als Peripheriegerät für eine Rechnereinheit mit einem Tastenfeld (3) und einem zugehörigen Gehäuse (2), wobei an dem Gehäuse (2) eine Verlängerung (6) befestigt ist, **dadurch gekennzeichnet, dass** in die Verlängerung (6) wenigstens ein Lesegerät für das berührungslose Auslesen von auf einer Identifikationskarte, einem Dokument oder einer Zugangskarte (7, 7') hinterlegten Daten aufgenommen Ist.

2. Tastatur nach Anspruch 1, **dadurch gekennzeichnet, dass** die Verlängerung (6) pultförmig ausgestattet ist.

3. Tastatur nach Anspruch 2, **dadurch gekennzeichnet, dass** die Verlängerung (6) einen vertikalen Säulenabschnitt (6a) und eine pultdachförmige Haube (6b) auswelst, sodass der vertikale Säulenabschnitt (6a) und die pultdachförmige Haube (6b) zu Aufnahme des wenigstens einen Lesegerätes für das berührungslose Auslesen der Daten dienen.

4. Tastatur nach einem der Ansprüche 1 bis 3, **dadurch gekennzeichnet, dass** das Lesegerät ein optisches Lesegerät, bevorzugt ein 2D-Scanner, für das Auslesen von auf der Identifikationskarte, dem Dokument oder der Zugangskarte (7, 7') optisch codierten Daten (7a') und/oder ein Funklesegerät für das Auslesen von in einem Funktransponder (7a) der Identifikationskarte oder Zugangskarte (7,7') hinterlegten Daten ist.

5. Tastatur nach Anspruch 4, **dadurch gekennzeichnet, dass** der vertikale Säulenabschnitt (6a) zur Aufnahme des Funktransponders dient.

6. Tastatur nach einem der vorhergehenden Ansprüche 1 bis 5, **dadurch gekennzeichnet, dass** der Fortsatz (6) auf der einem Bediener der Tastatur abgewandten Seite (5) des Gehäuses (2) der Tastatur angeordnet ist.

7. Tastatur nach einem der vorhergehenden Ansprüche 1 bis 6, **dadurch gekennzeichnet, dass** die Verlängerung (6) sich im Wesentlichen über die durch das Tastenfeld (3) definierte Ebene erhebt.

8. Tastatur (1) nach einem der vorhergehenden Ansprüche 1 bis 7, **dadurch gekennzeichnet, dass** die Verlängerung (6) so Ist, dass die Ablage der Karte oder des Dokumentes in die Ausformung zwischen dem Tastaturgehäuse (2) und der pultdachförmigen Haube (6a) nahezu hochkant und angelehnt erfolgt.

9. Tastatur nach einem der vorhergehenden Ansprüche 1 bis 8, **dadurch gekennzeichnet, dass** die Verlängorung (6) verschwenkbar und/oder verschiebbar gegenüber dem Gehäuse (2) der Tastatur gelagert ist.

10. Tastatur nach einem der vorhergehenden Ansprüche 1 bis 9, **dadurch gekennzeichnet, dass** die Verlängerung (6) trennbar und wieder befestigbar an dem Gehäuse (2) der Tastatur befestigt ist.

11. Tastatur (1) nach einem der vorhergehenden Ansprüche 1 bis 10, **dadurch gekennzeichnet, dass** der Fortsatz (6) mit dem Pultdach (6b) vom Bediener abgewandt fest, und / oder flexibel angeordnet ist.

12. Recheneinheit **gekennzeichnet durch** eine Tastatur (1) nach einem der vorhergehenden Ansprüche 1 bis 11.

13. Verwendung der Tastatur nach einem der Ansprüche 1 bis 11 zum optischen Auslesen und/oder Funkauslesen von auf Zugangs- oder Identifikationskarten oder Dokumenten hinterlegten Daten.

14. Verwendung der Tastatur nach Anspruch 13, wobei die Karten bzw. das Dokument ein Ausweis, ein Personalausweis, ein Reisepass, ein Führerschein, ein Flugticket, eine Kreditkarte oder ein sonstigen Kartenförmigen, personenbezogenen Träger von berührungslos auslesbaren Daten sind.

15. Verwendung der Tastatur nach einem der Ansprüche 1 bis 11 zur Dateneingabe bei einem Verleih, bei der Vermietung, bei Versicherungen, Im Hotel- und Gaststättengewerbe, bei der Zahlung-, der An- und Abmeldung auf Behörden, bei der Ausweiskontrolle an Grenzübergängen sowie beim Check- In auf Flughäfen.
